Europäisches Patentamt

European Patent Office

Office européen des brevets

(11) Publication number: **0 371 608**
**A2**

(12) **EUROPEAN PATENT APPLICATION**

(21) Application number: **89310914.0**

(22) Date of filing: **23.10.89**

(51) Int. Cl.⁵: **H04L 12/54, H04L 12/26**

(30) Priority: **29.11.88 US 277585**

(43) Date of publication of application:
**06.06.90 Bulletin 90/23**

(84) Designated Contracting States:
**DE FR GB IT**

(71) Applicant: **International Business Machines
Corporation
Old Orchard Road
Armonk, N.Y. 10504(US)**

(72) Inventor: **Kasiraj, Chander
2133 North Aspenwood
Grapevine Texas 76051(US)**
Inventor: **Wolf, Timothy James
2621 Cummings Drive
Bedford Texas 76021(US)**

(74) Representative: **Grant, Iain Murray
IBM United Kingdom Limited Intellectual
Property Department Hursley Park
Winchester Hampshire SO21 2JN(GB)**

(54) **Network object monitoring.**

㊄ A method is disclosed for providing an activity history for a selected object within an electronic network having multiple users, only certain of which have access to the selected object. An activity log is created for a selected object in response to a request from the object owner or a designated user having access to that object. Thereafter, the activities of all users are monitored with respect to the selected object and an indication of each activity is automatically stored within the activity log. The requesting user/owner may display or print the activity log upon request in order to provide a listing of the activities for subsequent review. The requesting user/owner may also request an alert message which is automatically transmitted to the requester in response to any activity with respect to the selected object.

*Fig. 3*

## NETWORK OBJECT MONITORING

This invention relates to object monitoring in multiple user electronic networks and in particular to methods whereby the activities of selected users with respect to a particular object may be documented. The disclosed arrangements can provide the basis for methods whereby a user may designate selected objects and receive an alert message in response to the activities of other users with respect to those objects.

Distributed computing systems are well known in the prior art. Such systems permit a plurality of end users to be simultaneously coupled via a network to a central processor or alternatively, permit multiple computers to be coupled together in a so-called Local Area Network (LAN). Such systems permit multiple users to share computer assets or objects such as documents, databases, files, programs, computational facilities, or electronic mail facilities.

While such systems represent an improvement over prior art computing systems there are certain inherent problems in the sharing of computer objects within suoh an electronic network. For example, one user may modify a document which belongs to a second user and neglect to tell the second user the manner in which the document was modified. Additionally, the owner of a particular document may wish to document the activities of that object which take place with regard to other users, in order to determine patterns of use by other users. Additionally, such known systems do not provide a method whereby the owner of an object may receive an alert message in response to the activities of another user with regard to that object. Therefore, it should be obvious that need exists for an improved electronic network wherein the owner or user of a selected computer object may receive additional information regarding the use of that object by other users.

It is therefore one object of the present invention to provide an improved multiple user electronic network.

The present invention provides a method of monitoring the activity of a selected object within an electronic network having multiple users having potential access thereto, the method including designating the object to be monitored within the electronic network, creating/updating an activity log containing a stored indication of the designated object, monitoring the activities of each user of the designated object and storing an indication of each activity of each user of the designated object within the activity log.

Such an arrangement can provide for the activities of other users with respect to a selected object within that network to be documented. The activities of other users with respect to a selected object being documented, a particular user may designate a selected object and receive an alert message in response to the activities of other users with respect to that object.

As disclosed hereinafter, in one example an activity log is created in accordance with the method of the present invention for a selected object in response to a request from the object owner or a user having access to that object. Thereafter, the activities of all users are monitored with respect to the selected object and an indication of each activity is automatically stored within the activity log. The requesting user/owner may then display or print the activity log in order to determine the type of and extent of activities of other users with respect to the selected object. The requesting user/owner may also be enabled to request an alert message which is then automatically transmitted to the requester in response to any activity with respect to the selected object.

The present invention will be described further by way of example with reference to embodiments thereof as illustrated in the accompanying drawings, in which:

Figure 1 is a block diagram of a multiple user electronic network;

Figure 2 is a logic flow chart of the user selections performed;

Figure 3 is a logic flow chart illustrating an activity log entry;

Figure 4 is a logic flow chart illustrating the implementation of an activity log; and

Figure 5 is a logic flow chart illustrating the implementation of an alert message option.

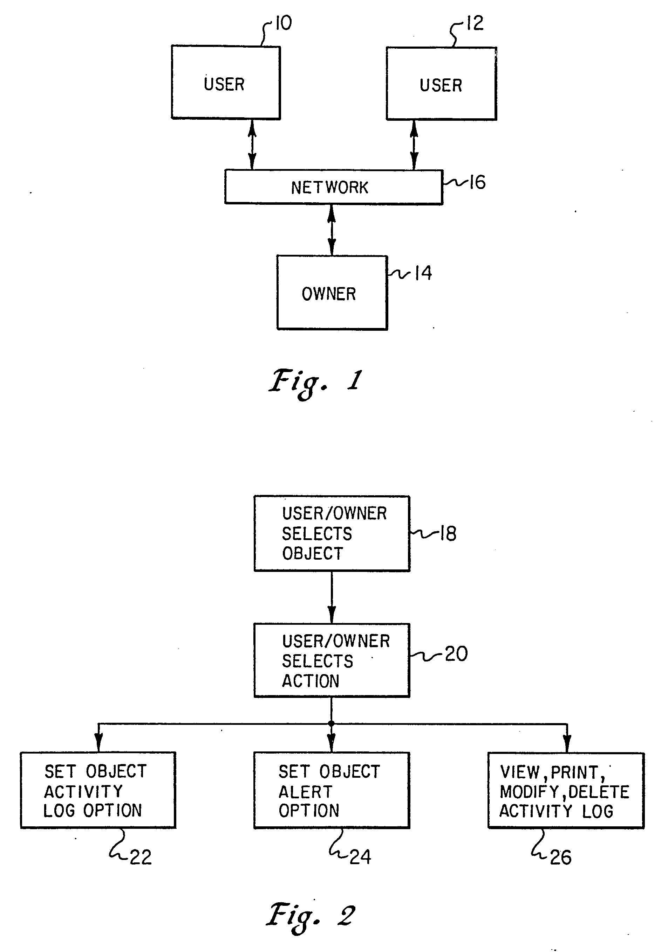

Figure 1 is a block diagram of a multiple user electronic network which may be used in conjunction with the method of the present invention. As may be seen, the multiple user electronic network includes a plurality of users, including user 10, user 12, and owner 14. Those skilled in the art will appreciate that owner 14 is merely a user who is the owner of a particular electronic network object such as a document, database, or file. User 10, user 12, and owner 14 are all coupled to a network 16. Those skilled in this art will appreciate that user 10, user 12, and owner 14 may each constitute an interactive work station which is coupled to a central processing unit via network 16 or, in the alternative, each user and/or owner may be implemented using a personal computer coupled together via a Local Area Network (LAN), as represented by network 16. As is common in such multiple user electronic networks, each user may be permitted access to one or more electronic network objects which may be shared with other users within network 16.

Referring now to Figure 2, there is depicted a logic flow chart illustrating the implementation by an user/owner of the method of the present invention. As may be seen, the process begins when an user/owner selects a particular object for which an activity history or alert option is desired. Next, the user/owner selects a particular action, as illustrated in block 20. The user/owner may select the setting of an object activity log option, as depicted in block 22. This particular option, as will be explained in greater detail herein, permits the user/owner of a particular object to create an activity log wherein the activities of each user with respect to that object may be documented for subsequent review.

Additionally, the user/owner may select the action of setting an object alert option, as illustrated in block 24. As will be explained in greater detail herein, the alert option permits a user/owner to receive an alert message automatically in response to the activity of any user with respect to a particular object. Finally, the user/owner may select to view, print, modify, or delete the activity log which has been previously established with regard to a particular object.

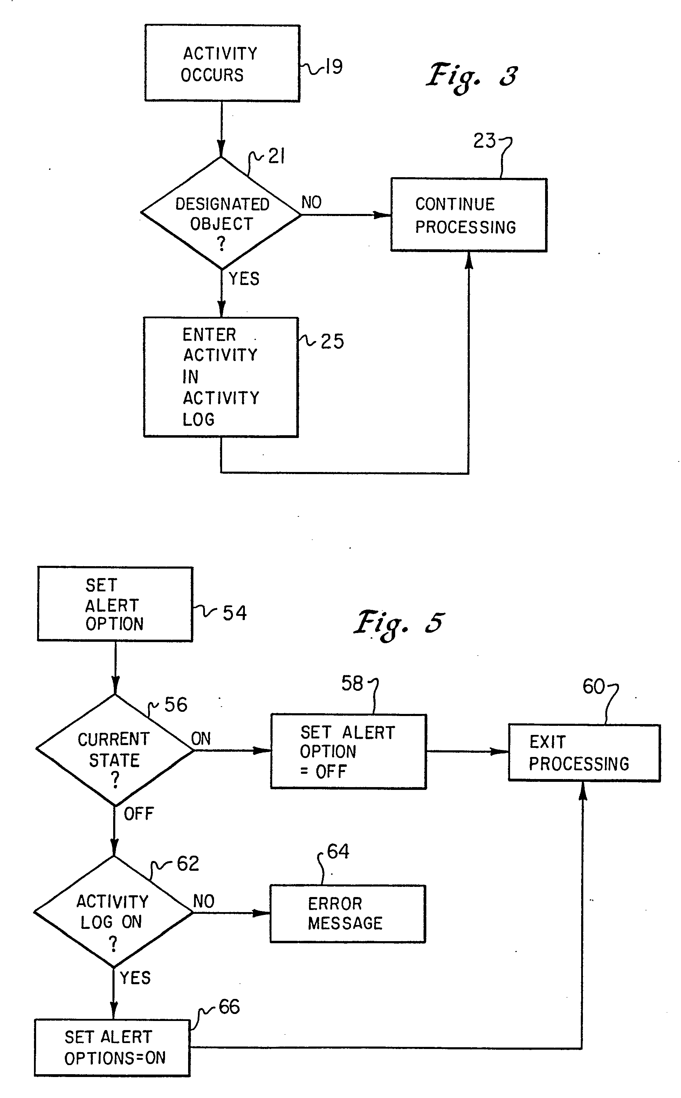

With reference now to Figure 3, there is depicted a logic flow chart illustrating an activity log entry in accordance with the method of the present invention. As may be seen, the process begins at block 19 with the occurrence of a particular activity with regard to an object within the electronic network. A determination is made, as depicted in block 21, of whether or not the activity has occurred with regard to a designated object. If not, the process continues as illustrated in block 23. In the event the activity has occurred with regard to a object which has previously designated by a user/owner, then block 25 illustrates the entering of that activity into the activity log which has been established for that object. In this manner, the activities of other users with regard to a designated object within the electronic network may be automatically entered into an activity log for subsequent review by the user who has elected the activity log option.

Those skilled in the art will appreciate that an activity log option may be elected by more than one user with regard to a particular object so long as each user has access to that particular object. In a preferred embodiment of the present invention the election of an activity log option will only be reported as an activity to the owner of a particular object within the electronic network.

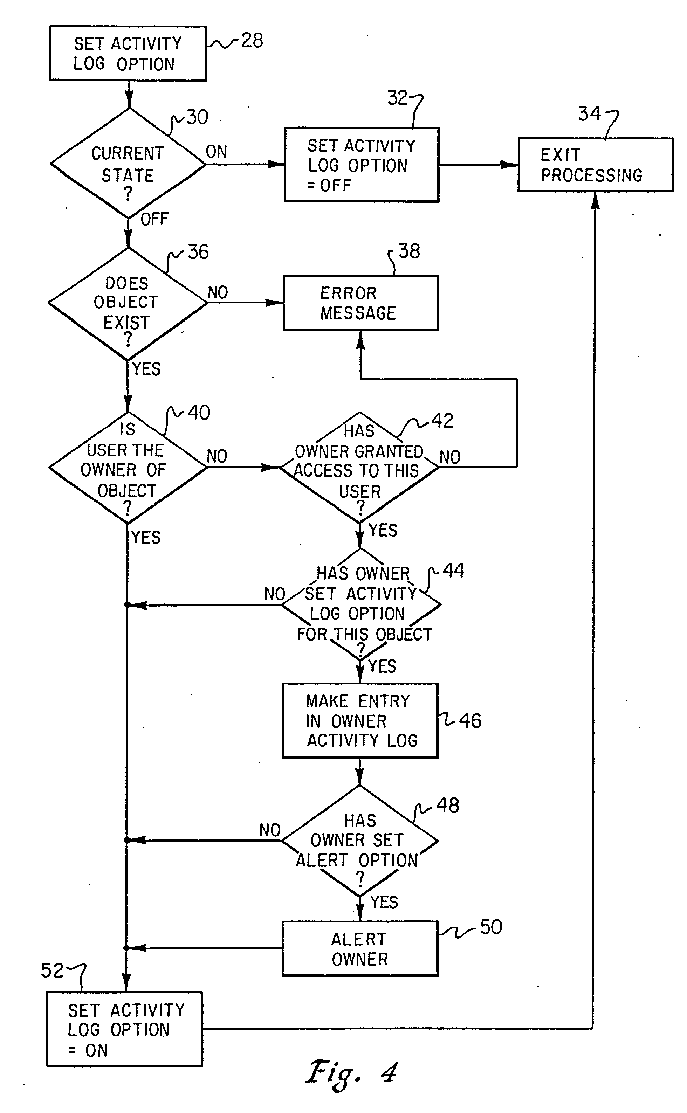

Referring now to Figure 4, there is depicted a logic flow chart illustrating the implementation of an activity log in accordance with the method of the present invention. As may be seen, the process begins with the setting of an activity log option, as depicted in block 28. Next, the current state of the activity log option is determined, as illustrated in block 30. In the event the activity log option state is currently "on," then block 32 illustrates the setting of the activity log option to an "off" state and the process terminates, as depicted in block 34.

In the event the current state of the activity log option is "off" then block 36 is used to determine whether or not the particular object designated by the user/owner exists. If the object does not exist, then block 38 illustrates the transmission of an error message. If the object designated by the user/owner does exist, then block 40 is used to determine whether or not the user requesting the activity log option is the owner of the designated object. In the event the user is the owner of the designated option, then block 52 illustrates the setting of the activity log option to "on" and the process again terminates, as illustrated in block 34.

In the event the user requesting an activity log option with regard to a designated object is not the owner of that object then block 42 is used to determine whether or not the owner of that object has granted access to this particular user. If not, block 38 illustrates the sending of an error message as above. In the event the owner of the designated object has granted access to that object to this particular user, as determined by block 42, then block 44 illustrates the determination of whether or not the object owner has set the activity log option for this particular object. If not, the activity log option is set for the user in question and the process terminates as above, as illustrated in block 34.

However, in the event the owner of the object which has been designated has set the activity log option for this particular option, then block 46 illustrates the making of an entry in the owner's activity log. Next, block 48 illustrates the determination of whether or not the owner of the designated object has set an alert option with regard to that object. If not, as above, block 52 illustrates the setting of the activity log option for this particular user and the process terminates, as illustrated in block 34. In the event the owner of the designated option has set an alert option, then block 50 illustrates the transmission of an alert message to the object owner. Thereafter, block 52 illustrates the setting of the activity log option to "on" for this particular user and the process again terminates, as illustrated in block 34.

With reference now to Figure 5, there is depicted a logic flow chart illustrating the implementation of an alert message option in accordance with the method of the present invention. As may be seen, the process begins by the setting of the alert option as depicted in block 54. Block 56 is used to depict the determination of the current state of the alert option. If the alert option is currently "on" then block 58 illustrates the setting of the alert option to "off" and the process terminates, as depicted in block 60.

In the event the current state of the alert option is "off," block 62 is used to depict the determination of whether or not an activity log option has been set for this particular object. If not, block 64 illustrates the transmission of an error message. This error message is transmitted due to a requirement in the depicted embodiment of the present invention that an alert message may not be sent unless an activity log has been set for the designated object. If the activity log option has been selected for this particular object, as determined by block 62, then block 66 illustrates the setting of the alert option to "on" and the process terminates, as depicted in block 60. Those skilled in this art will appreciate that it is possible to implement the alert option of the present invention without requiring that an activity log option be set.

As those skilled in the art will appreciate upon reference to the foregoing specification, the method of the present invention provides both an activity log and alert option whereby a designated user or owner of a particular object within an electronic network may create an activity log wherein the activities of other users with respect to that particular object may be recorded for subsequent review. In this manner, a designated user or owner may be easily alerted with regard to the activities of other users with respect to a particular object.

## Claims

1. A method of monitoring the activity of a selected object within an electronic network having multiple users having potential access thereto, the method including designating the object to be monitored within the electronic network, creating/updating an activity log containing a stored indication of the designated object, monitoring the activities of each user of the designated object and storing an indication of each activity of each user of the designated object within the activity log.

2. A method as claimed in claim 1, further including transmitting an alert message to a selected user in the network in response to an activity being stored with respect to the selected object.

3. A method as claimed in claim 2, wherein alert messages are generated only in response to a request from a user having access to the designated object.

4. A method as claimed in any of claim 1 to 3, further including displaying the activity log.

5. A method as claimed in any preceding claim, further including printing the activity log.

6. A method as claimed in any preceding claim, wherein the designated object comprises a document.

USER ~10

USER ~12

NETWORK ~16

OWNER ~14

## Fig. 1

USER/OWNER SELECTS OBJECT ~18

USER/OWNER SELECTS ACTION ~20

SET OBJECT ACTIVITY LOG OPTION ~22

SET OBJECT ALERT OPTION ~24

VIEW, PRINT, MODIFY, DELETE ACTIVITY LOG ~26

## Fig. 2

*Fig. 3*

```
┌─────────────┐
│  ACTIVITY   │~19
│   OCCURS    │
└─────────────┘
       │
       ▼
    ╱───────╲ ~21
   ╱          ╲        NO      ┌──────────────┐
  ╱ DESIGNATED ╲───────────────│   CONTINUE   │~23
  ╲   OBJECT   ╱               │  PROCESSING  │
   ╲    ?     ╱                └──────────────┘
    ╲───────╱                         ▲
       │ YES                          │
       ▼                              │
┌─────────────┐                       │
│   ENTER     │~25                    │
│  ACTIVITY   │                       │
│     IN      │                       │
│  ACTIVITY   │                       │
│    LOG      │                       │
└─────────────┘                       │
       │                              │
       └──────────────────────────────┘
```

*Fig. 5*

```
┌─────────────┐
│     SET     │~54
│    ALERT    │
│   OPTION    │
└─────────────┘
       │
       ▼
    ╱───────╲ ~56
   ╱          ╲    ON    ┌──────────────┐         ┌──────────────┐
  ╱  CURRENT   ╲─────────│  SET ALERT   │~58      │     EXIT     │~60
  ╲   STATE    ╱         │   OPTION     │─────────│  PROCESSING  │
   ╲    ?     ╱          │   = OFF      │         └──────────────┘
    ╲───────╱            └──────────────┘                ▲
       │ OFF                                             │
       ▼                                                 │
    ╱───────╲ ~62                                        │
   ╱          ╲    NO    ┌──────────────┐                │
  ╱  ACTIVITY  ╲─────────│    ERROR     │~64             │
  ╲  LOG ON    ╱         │   MESSAGE    │                │
   ╲    ?     ╱          └──────────────┘                │
    ╲───────╱                                            │
       │ YES                                             │
       ▼                                                 │
┌─────────────┐~66                                       │
│  SET ALERT  │─────────────────────────────────────────┘
│ OPTIONS=ON  │
└─────────────┘
```

*Fig. 4*